# EUROPEAN PATENT SPECIFICATION

(11) **EP 3 725 195 B1**
(45) Date of publication and mention of the grant of the patent: **12.10.2022**
(21) Application number: 19175987.7
(22) Date of filing: 22.05.2019
(51) Int. Cl.: A47J 37/08

(54) **TOASTER**
TOASTER
GRILLE-PAIN

(30) Priority: 15.04.2019 CN 201910297563
(43) Date of publication of application: 21.10.2020
(73) Proprietor: Jiangmen City Xinhui Henglong Innovative Housewares Co., Ltd., Jiangmen Guangdong 529156 (CN)
(72) Inventor: NIE, Huayao, Jiangmen, Guangdong 529156 (CN)
(74) Representative: Noréns Patentbyrå AB

(56) References cited:
- US-A- 1 687 712
- US-A- 3 800 691
- US-A- 5 694 831
- US-A1- 2015 053 093
- US-B1- 7 105 778

## Description

### FIELD

The disclosure relates to a heating equipment. More specifically, the disclosed embodiments relate to a toaster.

### BACKGROUND

In prior art, toaster is a food heating equipment, which is often called a bread slice oven, a bread toaster or a bread maker in China.

A common structure of toaster includes a body and a heater arranged in the body, wherein the body is provided with a toasting chamber at the top.

When in use, bread slices are vertically put into the toasting chamber and then toasted by the heater, and finally, the toasted bread slices are taken out for eating. In the prior art, for example, the patent application US7105778B1 discloses a combination toaster oven and toaster appliance for cooking and heating foodstuff, US2015/053093A1 discloses a toasting appliance having a housing and a toasting cavity and a cooking cavity, US3800691A discloses a toaster-oven comprising a plurality of readily releasable components, US5694831A discloses an electrical household appliance which permits simultaneous toasting of bread and cooking of food in separate cavities, and US1687712A discloses a holder adapted to be used with slices of bread of varying thickness.

However, many people have a habit of spreading jam on bread slices for a better taste, but the above mentioned prior arts vertically put bread slices which make it inconvenient for jam spreading; moreover, jam is easy to drip and overflow during toasting, resulting in contamination of the toaster.

### SUMMARY

The present disclosure is intended to solve one of the technical problems above in related art to some extent. Therefore, the disclosure provides a toaster, which makes it convenient to spread jam on bread, and also avoids contamination caused by jam dripping, so as to keep clean.

The disclosure is realized through the following technical solution:
A toaster includes a body including a first toasting chamber and a second toasting chamber. The first toasting chamber extends in a vertical direction, and is used for vertically toasting bread slices. The second toasting chamber extends in a horizontal direction, and is used for horizontally toasting bread slices. The first toasting chamber and the second toasting chamber are arranged crosswise.

Further, the body includes an upper cover and a lower plate. The upper cover is connected to the lower plate in a turnover manner, and the second toasting chamber is formed through the cooperation of the upper cover and the lower plate.

Further, the upper cover includes a first outer housing, a first inner housing and a first pipe. The first pipe is arranged between the first outer housing and the first inner housing. Both ends of the first pipe are respectively connected to the first outer housing and the first inner housing. An inner side of the first pipe is used for forming the first toasting chamber in a matching manner, and a bottom of the first inner housing is used for forming the second toasting chamber in a matching manner.

Further, the upper cover includes a first outer housing, a first inner housing and an annular bracket. The annular bracket connects an edge of the first outer housing with an edge of the first inner housing.

Further, the first inner housing includes a first side wall and a first top wall which are detachable. The first side wall is annular and integrally formed.

Further, the first inner housing includes a first side wall and a first top wall which are detachable, and the first top wall includes an arched first top plate and two first baffles sealing both ends of the first top plate.

Further, heating pipes are arranged in the first inner housing. A length direction of each heating pipe is along a line connecting the two first baffles. Both ends of each heating pipe are respectively connected to the two first baffles.

Further, four heating pipes are arranged in the body, and the four heating pipes are distributed in four quadrant areas formed by the intersection of the first toasting chamber and the second toasting chamber.

Further, the upper cover may be provided with an upper grill, the lower plate may be provided with a lower grill. The upper grill and the lower grill elastically clamp bread slices.

Further, the upper cover is provided with a vertical grill, the vertical grill is used for clamping bread slices for vertical toasting, and the upper grill and the lower grill are provided with a receding portion for receiving the vertical grill.

As compared with the prior art, the toaster provided by the disclosure has the beneficial effects that by arranging the first toasting chamber and the second toasting chamber, and making the first toasting chamber extend in the vertical direction and the second toasting chamber extend in the horizontal direction. Further, the first toasting chamber is used for vertically toasting bread slices, and the second toasting chamber is used for horizontally toasting bread slices, so that the toaster can realize both vertical toasting and horizontal toasting. In particular, when the toaster has the horizontal toasting function, one can conveniently put bread slices on the toaster for jam spreading, instead of clamping the bread slices with a hand, allowing toasting and jam spreading to be performed at the same time, and do not need to worry about the situation that jam drips into the toaster during toasting, thus ensuring the cleanness of the toaster. In addition, since the first toasting chamber and the second toasting chamber are arranged crosswise, on the one hand, a height of the toaster can be reduced, and an occupying area of the toaster can be reduced, so that the toaster is compact in structure and small in size, and is suitable for household use; on the other hand, the first toasting chamber and the second toasting chamber can share heating components, thereby reducing the number of components of the toaster and reducing the manufacturing cost.

### BRIEF DESCRIPTION OF THE DRAWINGS

In order to more clearly explain the technical solution in the embodiments of the present disclosure, the drawings needed in the description of the embodiments will be briefly explained as follows.

Obviously, the following drawings are only represent a part of the embodiments of the present disclosure, rather than all of the embodiments. Those skilled in the art can envisage other solutions or drawings according to these drawings without creative work.
Fig. 1 shows an exemplary structure in an embodiment of a toaster according to the present disclosure;
Fig. 2 shows a cross-section view of the toaster of Fig. 1;
Fig. 3 shows a perspective view of the toaster of Fig. 1 in an open state;
Fig. 4 shows an exploded view of an upper cover of the toaster of Fig. 3; and
Fig. 5 shows an exploded view of a lower plate of the toaster of Fig. 4.

### DETAILED DESCRIPTION

This section will describe in detail the specific embodiments of the present disclosure.

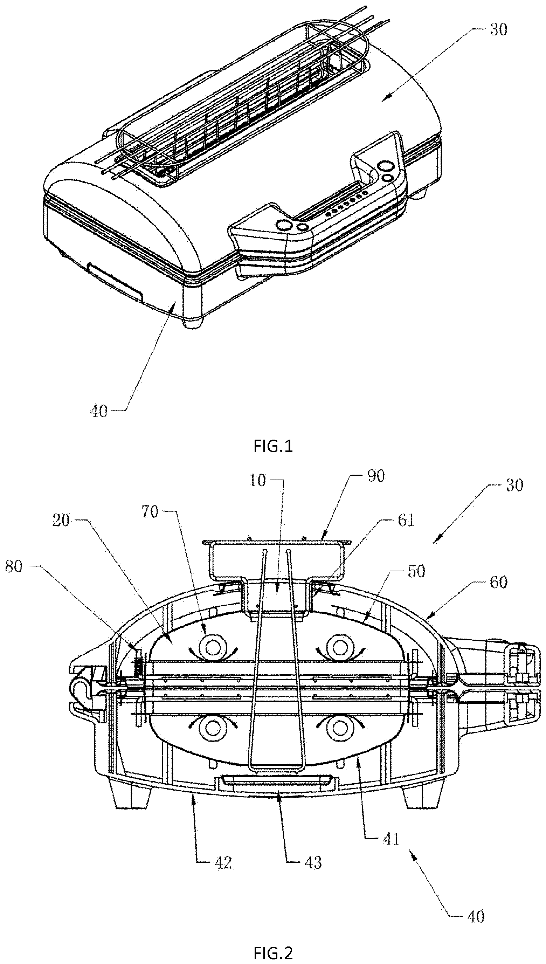

As shown in Fig. 1, a toaster includes a lower plate 40 and an upper cover 30, wherein the upper cover 30 is rotatably connected to the lower plate 40.

In the toaster, the upper cover 30 and the lower plate 40 are arranged, so that the upper cover 30 is located at the top of the lower plate 40. The upper cover 30 can cover the lower plate 40. A second toasting chamber 20 is formed between the upper cover 30 and the lower plate 40. The second toasting chamber 20 extends in a horizontal direction. The second toasting chamber 20 can be used for horizontal toasting of bread slices.

As the upper cover 30 is rotationally connected to the lower plate 40, the upper cover 30 can be rotated upward first, so that bread slices can be put on the lower plate 40 in flat, in order to conveniently apply the jam can to the bread slices. Then the upper cover 30 is rotated to return to the cover position, so that the upper cover 30 covers the lower plate 40 for toasting.

In other embodiments, the upper cover 30 and the lower plate 40 are not necessarily rotationally connected. A lifting type insertion configuration can also allow the function of horizontally toasting bread slices.

In the toasting process, the upper cover 30 covers the lower plate 40, and bread slices are isolated from the outside, thus reducing heat loss during toasting.

As shown in Fig. 1, in some embodiments, the upper cover 30 is further provided with a handle. In use, the upper cover 30 can be rotated by clamping the handle.

As shown in Fig. 1, in some embodiments, the upper cover 30 and the lower plate 40 are both provided with handles, so that the two handles can be held simultaneously to make the toaster easily moved or transported.

As shown in Fig. 1, in some embodiments, control buttons or indicator lights may be arranged on the handle of the upper cover 30.

By arranging the control buttons and indicator lights on the handle, on the one hand, a state of the toaster can be conveniently confirmed and adjusted before and after the upper cover 30 is rotated, so as to avoid searching by bending over; on the other hand, the design of the upper cover 30 and the lower plate 40 is simplified, and the processing contents of the upper cover 30 and the lower plate 40 are reduced. Moreover, as the control buttons and the indicator lights are positioned at the handle, the control buttons and the indicator lights are away from a heat source of the toaster, so that the heating accelerated aging of the control buttons and the indicator lights is avoided.

As shown in Figs. 2, 3, and 4, in some embodiments, the upper cover 30 may include a first outer housing 60, a first inner housing 50, and an annular bracket connecting the first outer housing 60 with the first inner housing 50. Specifically, the annular bracket connects an edge of the first outer housing 60 with an edge of the first inner housing 50.

The first inner housing 50 is arranged in the first outer housing 60, so that the toaster is of a double-layer structure. On the one hand, heat loss can be reduced, and on the other hand, hand scalding caused by accidentally touching the upper cover 30 can be avoided.

The annular bracket connects the first outer housing 60 with the first inner housing 50, and also keeps the first inner housing 50 at a distance from the first outer housing 60 to prevent the first inner housing 50 and the first outer housing 60 from touching and transferring heat.

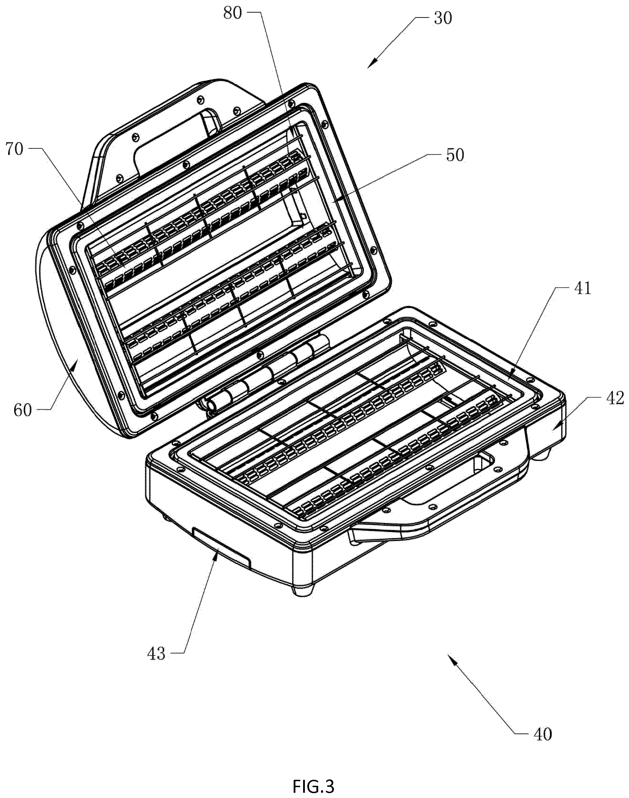

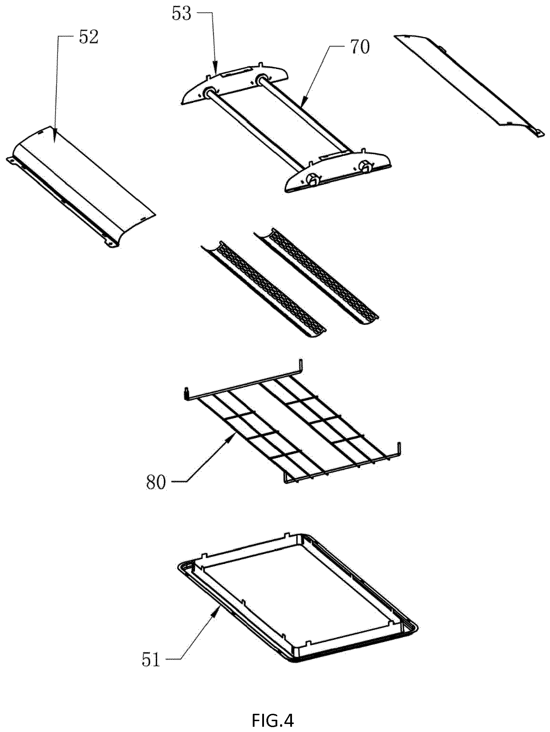

As shown in Figs. 3 and 4, the annular bracket is a rectangular frame, but alternatively, it can also be a polygon, a ring, etc., which is determined according to design model of the toaster.

The annular bracket is preferably formed of a single part, so that the number of parts is minimized, the manufacturing cost is reduced, and greasy dirt and the like are prevented from entering a gap between the first outer housing 60 and the first inner housing 50.

As shown in Figs. 2 and 3, a first pipe 61 is further arranged between the first outer housing 60 and the first inner housing 50. The first pipe 61 extends in a vertical direction. A bottom of the first pipe 61 communicates with an inner side of the first inner housing 50. A top of the first pipe 61 communicates with the outside after penetrating through the first outer housing 60.

Therefore, a vertically extending chamber is formed inside the first pipe 61, and the vertically extending chamber can be used to form a first toasting chamber 10, which is used for vertically toasting bread slices.

Of course, since a bottom of the first toasting chamber 10 communicates with the second toasting chamber 20, a space of the first toasting chamber 10 may not be limited to a portion in the first pipe 61, but may also include a portion shared with the second toasting chamber 20, and even there may be a portion belonging to the first toasting chamber 10 on a side, backing onto the upper cover 30, of the second toasting chamber 20, so that the first toasting chamber 10 and the second toasting chamber 20 are crossed.

Therefore, the intersection of the first toasting chamber 10 and the second toasting chamber 20 described herein includes two states that: the first toasting chamber 10 communicates with the second toasting chamber 20, and the first toasting chamber 10 penetrates through the second toasting chamber 20.

Therefore, in this embodiment, by arranging the first toasting chamber 10 and the second toasting chamber 20, the first toasting chamber 10 is used for vertically toasting bread slices, and the second toasting chamber 20 is used for horizontally toasting bread slices, so that the toaster can realize both vertical toasting and horizontal toasting.

In particular, when the toaster has the horizontal toasting function, people can conveniently put bread slices on the toaster for jam spreading, instead of clamping the bread slices with a hand, allowing toasting and jam spreading to be performed at the same time, and do not need to worry about the situation that jam drips into the toaster during toasting, thus ensuring the cleanness of the toaster.

In addition, since the first toasting chamber 10 and the second toasting chamber 20 are arranged crosswise. On the one hand, a height of the toaster can be reduced, and an occupying area of the toaster can be reduced, so that the toaster is compact in structure and small in size, and is suitable for household use. On the other hand, the first toasting chamber 10 and the second toasting chamber 20 can share heating components, thereby reducing the number of components of the toaster and reducing the manufacturing cost.

Of course, the intersection of the first toasting chamber 10 and the second toasting chamber 20 does not necessarily mean that the toaster has the upper cover 30 and the lower plate 40 which are rotatably connected. It is also possible to fixedly connect the upper cover 30 and the lower plate 40 and realize horizontal toasting by moving a grill in and out of the second toasting chamber 20. More likely, it is also possible to divide the upper cover 30 into a left part and a right part. The first toasting chamber 10 is formed between the two parts. By rotating the left part and the right part of the upper cover 30, the opening and closing of the first toasting chamber 10 and the second toasting chamber 20 can be realized to meet the requirement of placing bread slices.

As shown in Figs. 2 and 3, in some embodiments, the first inner housing 50 includes a first side wall 51 and a first top wall which are detachable. The first side wall 51 is annular.

The first side wall 51 is integrally formed, resulting in easy manufacture, low cost, and good appearance and texture.

The first side wall 51 and the first top wall are detachable, so that the first side wall 51 and the first top wall of the first inner housing 50 are processed separately, and the manufacturing difficulty is reduced.

In some embodiments, the first top wall may include an arched first top plate 52 and two first baffles 53 sealing both ends of the first top plate 52.

The two first baffles 53 and the first top plate 52 can be connected through clamping, insertion and the like, manufacturing and assembling are convenient, and the subsequent disassembly and assembly of heating pipes 70 are also very convenient.

Due to the presence of the first pipe 61, the first top plate 52 may be composed of two arc-shaped plates.

The first top wall is arched upward, that is, a cross section of the first top wall is arc-shaped. An extending direction of the arc is preferably set along a width direction of the first inner housing 50. An apex of the arc is set in the middle of the first inner housing 50.

The first top wall is arched upward. On the one hand, the first inner housing 50 is prevented from having edges and corners, therefore, a volume of a space enclosed by the first inner housing 50 is reduced, a space required for heating by a heater is reduced, and the heating efficiency is improved. On the other hand, compared with a square housing, the use of raw materials can be reduced, meanwhile, forming is convenient, and the manufacturing cost is reduced.

Furthermore, the upward arched first top wall will not affect the specifications of bread slices capable of being toasted by the toaster.

The first outer housing 60 can be integrally formed with reference to a shape of the first inner housing 50, which not only has the advantage of reducing an occupied space, but also facilitates manufacturing, so that the appearance of the toaster is better.

As shown in Figs. 2, 3, and 4, a heater for toasting bread is arranged inside the first inner housing 50.

The heating means of the heater can be resistance wire heating or light wave heating.

In order to ensure uniform heating and reduce the number of parts of the heater, the heater can be made up of a plurality of heating pipes 70. A length direction of the heating pipes 70 is arranged along a length direction of the first inner housing 50. The length direction of the heating pipes 70 is along with a line connecting the two first baffles 53. Both ends of each heating pipe 70 are respectively connected to the two first baffles 53, thereby prolonging the length of the heating pipes 70, reducing the number of the heating pipes 70 and facilitating the installation of the heating pipes 70.

Obviously, by arranging the plurality of heating pipes 70 in parallel in the first inner housing 50, bread slices can be uniformly heated.

In some embodiments, in order to maintain uniform heating, four or four groups of heating pipes 70 may be provided. The heating pipes 70 are distributed in a body, and the four or four groups heating pipes 70 are respectively distributed in four quadrant areas formed by the intersection of the first toasting chamber 10 and the second toasting chamber 20.

That is, two of the heating pipes 70 are disposed in the first inner housing 50 and the other two heating pipes 70 are disposed in the lower plate 40. The four heating pipes 70 are disposed in a vertically symmetrical and horizontally symmetrical manner to ensure that the distances between the heating pipes 70 and bread slices are consistent, so that the bread slices are uniformly heated.

A metal cover can be arranged outside each heating pipe 70 to prevent jam or bread crumbs from adhering to the heating pipe 70 to cause contamination or burning.

To facilitate toasting, as shown in Figs. 2, 3 and 4, the upper cover 30 can be provided with an upper grill 80, the lower plate 40 can be provided with a lower grill, and the upper grill 80 and the lower grill elastically clamp bread slices.

The upper grill 80 and the lower grill elastically clamp bread slices, so that bread slices with different thicknesses can be conveniently toasted, the deformation of bread slices can be reduced, the distances between two sides of bread slices and the heating pipes 70 can be uniformly reduced, and uniform heating and toasting can be realized.

In some embodiments, the upper cover 30 may be provided with a vertical grill 90 for clamping bread slices for vertical toasting. The upper grill 80 and the lower grill are provided with a receding portion for receiving the vertical grill 90.

Due to the existence of the receding portion, a height of the vertical grill 90 is not affected or even increased, and the specifications of vertically toasted bread slices are not affected.

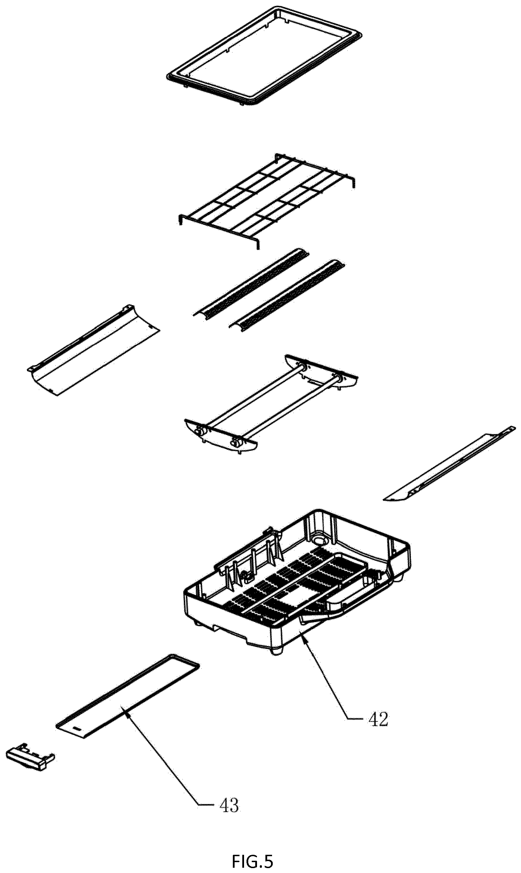

As shown in Figs. 1, 2, 3 and 5, in terms of the lower plate 40, the lower plate 40 may include a second inner housing 41 and a second outer housing 42. The second inner housing 41 may be symmetrically arranged with reference to the first inner housing 50 to reduce the design difficulty and manufacturing cost.

The second outer housing 42 can be designed with reference to the first outer housing 60, and structures such as supporting points, heat dissipation holes, and residue removal components 43 can be added to meet the use requirements.

In addition, by adopting high-power heating pipes 70, the toaster can be used for a barbecue.

As the upper cover 30 is rotationally connected to the lower plate 40, the upper cover 30 can be rotated by 180 degrees to form two platforms for horizontal toasting, which facilitates toasting in other scenes.

## Claims

1. A toaster, comprising
a body comprising a first toasting chamber (10) and a second toasting chamber (20), said body further comprising an upper cover (30),
wherein the first toasting chamber (10) extends in a vertical direction for vertically toasting bread slices, and the second toasting chamber (20) extends in a horizontal direction for horizontally toasting bread slices,
wherein the first toasting chamber (10) and the second toasting chamber (20) are arranged crosswise, and
wherein the upper cover (30) comprises a first outer housing (60), a first inner housing (50) and an annular bracket; and the annular bracket connects an edge of the first outer housing (60) with an edge of the first inner housing (50), the first inner housing (50) comprises a first side wall (51) and a first top wall, said toaster being **characterized in that** the first side wall (51) and first top wall are detachable; and the first side wall (51) is annular and integrally formed, the first top wall comprises an arched first top plate (52) and two first baffles (53) sealing both ends of the first top plate (52)..

2. The toaster according to claim 1, wherein:
the body comprises a lower plate (40);
the upper cover (30) is connected to the lower plate (40), the upper cover (30) is able to rotate relative to the lower plate (40); and
the second toasting chamber (20) is formed through the cooperation of the upper cover (30) and the lower plate (40).

3. The toaster according to claim 2, wherein:
the upper cover (30) comprises a first inner housing (50), a first outer housing (60) and a first pipe (61) arranged between the first outer housing (60) and the first inner housing (50);
both ends of the first pipe (61) are respectively connected to the first outer housing (60) and the first inner housing (50);
an inner side of the first pipe (61) forms the first toasting chamber (10) in a matching manner; and
a bottom of the first inner housing (50) forms the second toasting chamber (20) in a matching manner.

4. The toaster according to claim 3, wherein:
heating pipes (70) are arranged in the first inner housing (50);
a length direction of each heating pipe (70) is along a line connecting the two first baffles (53); and
both ends of each heating pipe (70) are respectively connected to the two first baffles (53).

5. The toaster according to claim 4 , wherein the body further comprises four heating pipes (70) distributed respectively in four quadrant areas formed by the intersection of the first toasting chamber (10) and the second toasting chamber (20).

6. The toaster according to claim 2, wherein the upper cover (30) is provided with an upper grill (80), the lower plate (40) is provided with a lower grill, so that the upper grill (80) and the lower grill can elastically clamp bread slices.

7. The toaster according to claim 6, wherein:
the upper cover (30) is provided with a vertical grill (90) for clamping bread slices for vertical toasting; and each of the upper grill (80) and the lower grill is provided with a receding portion for receiving the vertical grill (90).

## Patentansprüche

1. Toaster mit einem Körper, der eine erste Toastkammer (10) und eine zweite Toastkammer (20) aufweist, wobei der Körper ferner eine obere Abdeckung (30) aufweist,
wobei sich die erste Toastkammer (10) in vertikaler Richtung erstreckt, um Brotscheiben vertikal zu toasten, und sich die zweite Toastkammer (20) in horizontaler Richtung erstreckt, um Brotscheiben horizontal zu toasten,
wobei die erste Toastkammer (10) und die zweite Toastkammer (20) kreuzweise angeordnet sind, und
wobei die obere Abdeckung (30) ein erstes äußeres Gehäuse (60), ein erstes inneres Gehäuse (50) und eine ringförmige Klammer umfasst; und die ringförmige Klammer einen Rand des ersten äußeren Gehäuses (60) mit einem Rand des ersten inneren Gehäuses (50) verbindet,
wobei das erste innere Gehäuse (50) eine erste Seitenwand (51) und eine erste obere Wand umfasst,
wobei der Toaster **dadurch gekennzeichnet ist, dass** die erste Seitenwand (51) und die erste obere Wand abnehmbar sind; und die erste Seitenwand (51) ringförmig und einstückig ausgebildet ist, wobei die erste obere Wand eine gewölbte erste obere Platte (52) und zwei erste Prallplatten (53) umfasst, die beide Enden der ersten oberen Platte (52) abdichten.

2. Toaster nach Anspruch 1, wobei:
der Körper eine untere Platte (40) umfasst;
die obere Abdeckung (30) mit der unteren Platte (40) verbunden ist, die obere Abdeckung (30) relativ zur unteren Platte (40) drehbar ist; und die zweite Toastkammer (20) durch das Zusammenwirken der oberen Abdeckung (30) und der unteren Platte (40) gebildet wird.

3. Toaster nach Anspruch 2, wobei:
die obere Abdeckung (30) ein erstes inneres Gehäuse (50), ein erstes äußeres Gehäuse (60) und ein erstes Rohr (61) umfasst, das zwischen dem ersten äußeren Gehäuse (60) und dem ersten inneren Gehäuse (50) angeordnet ist;
beide Enden des ersten Rohrs (61) sind mit dem ersten äußeren Gehäuse (60) bzw. dem ersten inneren Gehäuse (50) verbunden;
eine Innenseite des ersten Rohrs (61) die erste Toastkammer (10) passend bildet; und
ein Boden des ersten inneren Gehäuses (50) die zweite Toastkammer (20) in passender Weise bildet.

4. Toaster nach Anspruch 3, wobei:
im ersten inneren Gehäuse (50) Heizrohre (70) angeordnet sind;
eine Längsrichtung jedes Heizrohrs (70) entlang einer Linie verläuft, die die beiden ersten Prallplatten (53) verbindet; und
die beiden Enden jedes Heizrohrs (70) sind jeweils mit den beiden ersten Preallplatten (53) verbunden.

5. Toaster nach Anspruch 4,
wobei der Körper ferner vier Heizrohre (70) umfasst, die jeweils in vier Quadrantenbereichen verteilt sind, die durch die Schnittlinie der ersten Toastkammer (10) und der zweiten Toastkammer (20) gebildet werden.

6. Toaster nach Anspruch 2, wobei die obere Abdeckung (30) mit einem oberen Gitter (80) und die untere Platte (40) mit einem unteren Gitter versehen sind, sodass das obere Gitter (80) und das untere Gitter Brotscheiben elastisch einklemmen können.

7. Toaster nach Anspruch 6, wobei:
die obere Abdeckung (30) mit einem vertikalen Gitter (90) zum Einklemmen von Brotscheiben zum vertikalen Toasten versehen ist; und sowohl das obere Gitter (80) als auch das untere Gitter mit einem zurückspringenden Abschnitt zur Aufnahme des vertikalen Gitters (90) versehen sind.

## Revendications

1. Grille-pain comprenant :
un corps comprenant une première chambre pour griller le pain (10) et une seconde chambre pour griller le pain (20), ledit corps comprenant en outre un couvercle supérieur (30),
dans lequel la première chambre pour griller le pain (10) s'étend dans une direction verticale pour griller verticalement des tranches de pain, et la seconde chambre pour griller le pain (20) s'étend dans une direction horizontale pour griller horizontalement des tranches de pain,
dans lequel la première chambre pour griller le pain (10) et la seconde chambre pour griller le pain (20) sont agencées transversalement, et
dans lequel :
le couvercle supérieur (30) comprend un premier logement externe (60), un premier logement interne (50) et un support annulaire ; et le support annulaire raccorde un bord du premier logement externe (60) avec un bord du premier logement interne (50), le premier logement interne (50) comprend une première paroi latérale (51) et une première paroi supérieure, ledit grille-pain étant **caractérisé en ce que** la première paroi latérale (51) et la première paroi supérieure sont détachables; et la première paroi latérale (51) est annulaire et formée de manière solidaire, la première paroi supérieure comprend une première plaque supérieure arquée (52) et deux premiers déflecteurs (53) réalisant l'étanchéité des deux extrémités de la première plaque supérieure (52).

2. Grille-pain selon la revendication 1, dans lequel :
le corps comprend une plaque inférieure (40) ;
le couvercle supérieur (30) est raccordé à la plaque inférieure (40), le couvercle supérieur (30) peut tourner par rapport à la plaque inférieure (40) ; et
la seconde chambre pour griller le pain (20) est formée par le biais de la coopération du couvercle supérieur (30) et de la plaque inférieure (40).

3. Grille-pain selon la revendication 2, dans lequel :
le couvercle supérieur (30) comprend un premier logement interne (50), un premier logement externe (60) et un premier tuyau (61) agencé entre le premier logement externe (60) et le premier logement interne (50) ;
les deux extrémités du premier tuyau (61) sont respectivement raccordées au premier logement externe (60) et au premier logement interne (50) ;
un côté interne du premier tuyau (61) forme la première chambre pour griller le pain (10) d'une manière correspondante ; et
un fond du premier logement interne (50) forme la seconde chambre pour griller le pain (20) d'une manière correspondante.

4. Grille-pain selon la revendication 3, dans lequel :
des tuyaux de chauffage (70) sont agencés dans le premier logement interne (50) ;
une direction de longueur de chaque tuyau de chauffage (70) est le long d'une ligne raccordant les deux premiers déflecteurs (53) ; et
les deux extrémités de chaque tuyau de chauffage (70) sont raccordées respectivement aux deux premiers déflecteurs (53).

5. Grille-pain selon la revendication 4, dans lequel le corps comprend en outre quatre tuyaux de chauffage (70) respectivement répartis dans quatre zones de quadrant formées par l'intersection de la première chambre pour griller le pain (10) et de la seconde chambre pour griller le pain (20).

6. Grille-pain selon la revendication 2, dans lequel le couvercle supérieur (30) est prévu avec un grill supérieur (80), la plaque inférieure (40) est prévue avec un grill inférieur, de sorte que le grill supérieur (80) et le grill inférieur peuvent serrer élastiquement les tranches de pain.

7. Grille-pain selon la revendication 6, dans lequel :
le couvercle supérieur (30) est prévu avec un grill vertical (90) pour serrer des tranches de pain pour les griller verticalement ; et chacun parmi le grill supérieur (80) et le grill inférieur est prévu avec une partie en retrait pour recevoir le grill vertical (90).
